(19) Europäisches Patentamt
European Patent Office
Office européen des brevets

(11) **EP 3 236 053 A1**

(12) **DEMANDE DE BREVET EUROPEEN**

(43) Date de publication:
**25.10.2017 Bulletin 2017/43**

(51) Int Cl.:
*F02D 41/00* (2006.01)    *F01N 5/04* (2006.01)
*F02M 26/34* (2016.01)    *F02M 26/44* (2016.01)

(21) Numéro de dépôt: **17156856.1**

(22) Date de dépôt: **20.02.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **04.03.2016 FR 1651826**

(71) Demandeur: **Valeo Systèmes De Contrôle Moteur 95800 Cergy St Christophe (FR)**

(72) Inventeurs:
• **ANGELOT, Pierre-Julian**
  **78500 SARTROUVILLE (FR)**
• **COPPIN, Thomas**
  **95000 CERGY (FR)**

(74) Mandataire: **Garcia, Christine**
**Propriété Intellectuelle**
**Valeo Systèmes de Contrôle Moteur**
**14, avenue des Béguines**
**95800 Cergy St Christophe (FR)**

(54) **PROCÉDÉ DE CONTRÔLE D'UNE PRODUCTION D'ÉLECTRICITÉ SUR UN VÉHICULE AUTOMOBILE**

(57)    La présente invention décrit un procédé de contrôle d'une production d'électricité sur un véhicule automobile, à partir d'un générateur électrique (12), ce générateur étant agencé pour être entraîné en rotation par une turbine (7) placée dans un circuit de recirculation (4) des gaz d'échappement d'un moteur thermique (1) du véhicule, le circuit de recirculation (4) comportant :
- Une branche principale (5) de recirculation,
- Une branche de dérivation (6),
- Une vanne (8) agencée pour régler le débit traversant la branche de dérivation (6) de la turbine,
- Une vanne (11) agencée pour régler le débit traversant la branche principale (5) de recirculation,
caractérisé en ce que le procédé comporte l'étape de produire de l'électricité en contrôlant l'un des éléments suivants :
- La vanne (8) de la branche de dérivation (6),
- La vanne (11) de la branche principale (5) de recirculation,
- Le générateur électrique (12).

**Fig. 1**

**Description**

La présente invention concerne un procédé de contrôle de la production d'électricité sur un véhicule automobile.

On connait, par exemple par le brevet EP2379867, le principe de recirculer une partie des gaz d'échappement d'un moteur à combustion vers l'admission du moteur. Cette technologie permet sur les moteurs Diesel, de réduire les émissions d'oxyde d'azote. Sur les moteurs à allumage commandé, elle permet de diminuer la consommation de carburant. On connait également, par exemple par la demande de brevet FR20140055947, le principe de récupérer une partie de l'énergie des gaz d'échappement recirculés entre l'échappement et l'admission du moteur, en plaçant un turbo-générateur dans le circuit de recirculation. Les gaz d'échappement recirculés entraînent ainsi en rotation une turbine, qui est couplée mécaniquement à un générateur électrique. L'électricité produite par ce générateur vient s'ajouter à l'énergie électrique produite par la source principale d'électricité du véhicule, qui est généralement un alternateur entraîné par le moteur à combustion.

Le débit de gaz d'échappement recirculés varie en temps réel avec les conditions d'utilisation du moteur thermique, et doit être régulé afin de répondre aux besoins du moteur. Une fois le débit de consigne assuré, il est souhaitable de récupérer le maximum d'énergie électrique grâce au turbo-générateur. Le but du procédé selon l'invention est d'optimiser la récupération d'énergie électrique tout en assurant le bon débit de gaz d'échappement recirculés.

A cet effet, l'invention propose un procédé de contrôle d'une production d'électricité sur un véhicule automobile, à partir d'un générateur électrique, ce générateur étant agencé pour être entraîné en rotation par une turbine placée dans un circuit de recirculation des gaz d'échappement d'un moteur thermique du véhicule, la turbine étant agencée pour être entraînée par les gaz d'échappement recirculés, le circuit de recirculation comportant :

- Une branche principale de recirculation permettant aux gaz d'échappement recirculés de traverser la turbine, les gaz ayant traversé la turbine rejoignant ensuite un circuit d'admission du moteur,
- Une branche de dérivation permettant de dériver au moins une partie des gaz entrant dans le circuit de recirculation vers une portion de la branche principale de recirculation située en aval de la turbine, sans traverser la turbine,
- Une vanne agencée pour régler le débit traversant la branche de dérivation de la turbine,
- Une vanne agencée pour régler le débit traversant la branche principale de recirculation, caractérisé en ce que le procédé comporte l'étape de produire de l'électricité en contrôlant sélectivement au moins l'un des éléments suivants : (étape 55)

- La vanne de la branche de dérivation,
- La vanne de la branche principale de recirculation,
- Le générateur électrique.

Le contrôle des deux vannes distinctes ainsi que du générateur électrique permet d'optimiser le fonctionnement du groupe moto-propulseur selon divers critères.

Selon une caractéristique de l'invention, le procédé comporte l'étape :

- Contrôler la vanne de la branche principale de recirculation et la vanne de la branche de dérivation de manière à contrôler le débit de gaz d'échappement recirculés dans le circuit de recirculation à un niveau souhaité.

Le contrôle du débit de gaz d'échappement recirculés permet d'assurer de bonnes conditions de combustion du moteur thermique, ces conditions de combustion étant adaptées aux situations de fonctionnement du moteur.

Selon une caractéristique de l'invention, le procédé comporte l'étape :

- Contrôler la vanne de la branche principale de recirculation et la vanne de la branche de dérivation de manière à maximiser la puissance isentropique reçue par la turbine.

Pour un débit de gaz recirculés donné, il est souhaitable de récupérer le maximum d'énergie électrique possible avec le turbo-générateur. Le rendement thermodynamique de la turbine et le rendement électrique du générateur étant déterminés, cela revient à maximiser la puissance isentropique reçue par la turbine. Une manière d'obtenir ce résultat est de contrôler la vanne de la branche principale et la vanne de la branche de dérivation.

Selon une caractéristique de l'invention, le procédé comporte l'étape :

- Contrôler le courant produit par le générateur de manière à maximiser la puissance électrique fournie par le turbo-générateur.

Une autre manière de contrôler la turbine, qui peut être utilisée seule ou en complément de la manière précédente, est de contrôler l'intensité du courant produit par le générateur. En augmentant le courant fourni, le couple résistant du générateur augmente, ce qui modifie le régime de rotation de la turbine et par conséquent son rendement.

Selon une caractéristique de l'invention, le procédé comporte l'étape :

- Recevoir une consigne de débit de gaz circulant dans le circuit de recirculation, (étape 50)

- Estimer le débit de gaz circulant dans le circuit de recirculation, (étape 51)
- Comparer le débit estimé de gaz recirculés et le débit de consigne. (étape 52)

Le type de contrôle mis en jeu dépend de l'écart entre le débit de consigne de gaz d'échappement recirculés et le débit réel estimé.

Selon une caractéristique de l'invention, le procédé comporte l'étape :

- Si le débit de consigne est supérieur au débit estimé de gaz recirculés, contrôler la vanne de la branche principale de façon à augmenter le débit traversant la branche principale. (étape 53)

En augmentant le débit dans la branche principale de recirculation, le circuit complet de recirculation est rendu plus perméable, c'est-à-dire offre moins de résistance à l'écoulement des gaz. Par conséquent, le débit de gaz recirculés va augmenter et se rapprocher du débit de consigne.

Selon une caractéristique de l'invention, le procédé comporte l'étape :

- Si le débit de consigne est supérieur au débit estimé de gaz recirculés, contrôler la vanne de la branche de dérivation de façon à augmenter le débit traversant la branche de dérivation. (étape 53b)

Lorsque la vanne de recirculation de la branche principale a atteint son ouverture maximum mais que le débit de consigne reste néanmoins supérieur au débit de gaz recirculés, la perméabilité du circuit complet de recirculation peut être de nouveau augmentée en contrôlant la vanne de la branche de dérivation de façon à augmenter le débit traversant la branche de dérivation. Par conséquent, le débit de gaz recirculés va augmenter et se rapprocher du débit de consigne.

Selon une caractéristique de l'invention, le procédé comporte l'étape :

- Si le débit de consigne est inférieur au débit estimé de gaz recirculés, contrôler la vanne de la branche de dérivation de façon à diminuer le débit traversant la branche de dérivation. (étape 54)

A l'inverse du cas précédent, lorsque le débit de gaz d'échappement recirculés est excessif, le circuit de recirculation dans son ensemble doit être rendu moins perméable, afin de s'opposer davantage à l'écoulement des gaz.

Une première action possible est de diminuer l'ouverture de la vanne de la branche de dérivation.

Selon une caractéristique de l'invention, le procédé comporte l'étape :

- Si le débit de consigne est inférieur au débit estimé de gaz recirculés, contrôler la vanne de la branche principale de recirculation de façon à diminuer le débit dans la branche principale de recirculation. (étape 54b)

Une deuxième action possible pour atteindre ce résultat est de diminuer l'ouverture de la vanne de la branche principale de recirculation. Le débit de gaz recirculés va ainsi diminuer et se rapprocher du débit de consigne.

Avantageusement, le débit de gaz recirculés est estimé à partir d'une valeur estimée de la surface de passage de la vanne de la branche principale de recirculation, de la température des gaz et de la valeur mesurée de la différence de pression entre un côté amont et un côté aval de la vanne de la branche principale de recirculation.

Ce mode d'estimation, classique, fournit une bonne précision.

En variante, le débit de gaz recirculés est estimé à partir d'une valeur estimée du débit total de gaz admis dans le moteur et d'une valeur mesurée du débit total d'air admis dans le moteur. Par soustraction du débit d'air admis au total admis, on obtient le débit de gaz recirculés. Lorsque les capteurs équipent déjà le moteur afin de gérer son fonctionnement, le débit de gaz recirculés peuvent être déterminé sans faire appel à des capteurs supplémentaires.

De préférence, la différence de pression entre un côté amont et un côté aval de la vanne de la branche principale de recirculation est mesurée par un capteur de pression différentielle. La différence de pression entre le côté amont et le côté aval de la vanne est obtenue directement par un capteur connecté fluidiquement de chaque coté de la vanne.

Selon une caractéristique de l'invention, le procédé comporte l'étape :

- Contrôler la vanne de la branche principale de recirculation et la vanne de la branche de dérivation de manière à limiter le régime de rotation de la turbine.

Afin de garantir sa fiabilité, le régime de rotation de l'ensemble constitué par la turbine d'une part et le générateur d'autre part doit être limité. Le contrôle du débit dans chacune des deux vannes permet d'obtenir ce résultat.

En variante où de manière complémentaire, le procédé comporte l'étape :

- Contrôler le courant produit par le générateur de manière à limiter le régime de rotation de la turbine.

Une autre manière de limiter le régime de rotation de l'ensemble turbine / générateur est de contrôler le courant produit par le générateur. Cette méthode peut être utilisée seule ou en complément de la méthode précédente.

Plus précisément, l'intensité du courant produit par le générateur est augmentée de manière à limiter le régime de rotation de la turbine.

En augmentant l'intensité du courant produit par le générateur, le couple résistant du générateur est augmenté, ce qui fait diminuer le régime de rotation de l'ensemble tournant constitué de la turbine et du générateur.

Selon une caractéristique de l'invention, le procédé comporte l'étape :

- Contrôler un dispositif agencé pour appliquer un couple de frottement à la turbine de manière à limiter le régime de rotation de la turbine.

Une autre manière d'augmenter le couple résistant de l'ensemble tournant est d'appliquer un effort de freinage sous la forme d'un frottement mécanique. Un tel dispositif permet une limitation rapide du régime de rotation de l'ensemble tournant, ce qui est intéressant lorsque l'énergie récupérée est importante et les accélérations de la turbine sont élevées.

Selon un mode de réalisation, la vanne de la branche principale de recirculation est située dans la branche principale de recirculation en aval de la jonction entre la branche de dérivation et la branche principale.

Le circuit de dérivation de la turbine rejoint la branche principale près de la turbine, ce qui permet d'obtenir une turbine compacte et facile à intégrer dans le circuit de recirculation.

Selon un autre mode de réalisation, la vanne de la branche principale de recirculation est située dans la branche principale de recirculation en amont de la jonction entre la branche de dérivation et la branche principale.

Dans ce cas la vanne de recirculation des gaz d'échappement peut être disposée au plus près de la turbine. Cette solution peut être intéressante pour certaines configurations de circuit d'échappement.

Selon un mode de réalisation, la vanne de la branche principale est située dans la branche principale de recirculation en aval d'un échangeur de chaleur agencé pour refroidir les gaz d'échappements recirculés.

Les composants de la vanne de la branche principale sont ainsi moins sollicités thermiquement, ce qui améliore la fiabilité de la vanne et permet d'utiliser des matériaux moins onéreux.

Selon une caractéristique de l'invention, la vanne de la branche principale de recirculation des gaz d'échappement comporte un obturateur mobile entre une position d'ouverture minimale et une position d'ouverture maximale.

La variation de la position de l'obturateur mobile permet de faire varier la section de passage de la vanne et par conséquent le débit de gaz traversant la vanne.

Selon un mode de réalisation, l'obturateur mobile de la vanne de la branche principale est un volet rotatif, le volet étant agencé pour pivoter autour d'un axe de rotation. Ce type de mécanisme d'actionnement permet d'obtenir une vanne créant peu de pertes de charge en pleine ouverture.

Selon un autre mode de réalisation, l'obturateur mobile de la vanne de la branche principale est une soupape, la soupape étant agencée pour se déplacer linéairement. Ce type de mécanisme d'actionnement permet une bonne étanchéité et limite les fuites parasites.

De préférence, la position d'ouverture minimale de l'obturateur mobile de la vanne correspond à un débit nul à travers la branche principale de recirculation des gaz d'échappement. Il est souhaitable d'avoir un niveau de fuite parasite aussi faible que possible. Par débit nul, on entend une absence de circulation de gaz à l'exception des inévitables fuites résiduelles.

Selon une caractéristique de l'invention, la vanne de la branche de dérivation comporte un obturateur mobile entre une position d'ouverture minimale et une position d'ouverture maximale.

Comme précédemment, la variation de la position de l'obturateur mobile permet de faire varier la section de passage de la vanne et par conséquent le débit de gaz traversant la branche de dérivation.

Selon un mode de réalisation, l'obturateur mobile de la vanne de la branche de dérivation est un volet rotatif, le volet étant agencé pour pivoter autour d'un axe de rotation. Selon un autre mode de réalisation, l'obturateur mobile de la vanne de la branche de dérivation est une soupape.

Ce type d'obturateur permet d'obtenir une bonne étanchéité même sous des pressions élevées de gaz.

Avantageusement, la position d'ouverture minimale de l'obturateur mobile de la vanne correspond à un débit nul à travers la branche de dérivation.

Il est souhaitable d'obtenir un débit nul lorsque la vanne est en position fermée, aux fuites près. Ainsi l'intégralité des gaz traversant le circuit de recirculation traverse la turbine, ce qui permet d'augmenter l'énergie récupérable.

Selon un mode de réalisation de l'invention, la vanne de la branche de dérivation est agencée pour avoir seulement deux positions d'équilibre stable de l'obturateur mobile, la première position correspondant à la position d'ouverture minimale, la deuxième position correspondant à la position d'ouverture maximale.

L'actionneur de l'obturateur mobile est ainsi de construction simple et économique. Son contrôle est également simplifié.

Selon un mode de réalisation, l'échangeur de chaleur agencé pour refroidir les gaz d'échappements recirculés est de type air/air.

Ce type d'échangeur n'a pas besoin d'être relié au circuit d'eau du moteur, ce qui simplifie son installation dans certaines configurations.

Selon un autre mode de réalisation, l'échangeur de chaleur agencé pour refroidir les gaz d'échappements recirculés est de type air/eau.

Ce type d'échangeur permet un meilleur refroidissement des gaz recirculés et améliore leur efficacité en termes de réduction d'émissions polluantes et de réduction de consommation de carburant du moteur.

Avantageusement, la surface de passage de la vanne de la branche principale de recirculation est estimée à partir d'une mesure de la position de l'obturateur mobile de la vanne. De façon classique, la connaissance de la position de l'obturateur permet de déterminer la section de passage efficace de la vanne. La valeur de la section efficace de la vanne permet ensuite de déterminer le débit traversant la vanne, en utilisant les caractéristiques physiques des gaz telles la pression et la température.

L'invention concerne également un système de contrôle 100 d'une production d'électricité sur un véhicule automobile, comportant :

- un générateur électrique, ce générateur étant agencé pour être entraîné en rotation par une turbine placée dans un circuit de recirculation des gaz d'échappement d'un moteur thermique du véhicule, la turbine étant agencée pour être entraînée par les gaz d'échappement recirculés, le circuit de recirculation comportant :

  ◦ Une branche principale de recirculation permettant aux gaz d'échappement recirculés de traverser la turbine, les gaz traversant la turbine rejoignant ensuite un circuit d'admission du moteur,
  ◦ Une branche de dérivation permettant de dériver au moins une partie des gaz entrant dans le circuit de recirculation vers une portion de la branche principale de recirculation située en aval de la turbine, sans traverser la turbine,
  ◦ Une vanne agencée pour régler le débit traversant la branche de dérivation de la turbine,
  ◦ Une vanne agencée pour régler le débit traversant la branche principale de recirculation,

- Une unité de contrôle agencée pour produire de l'électricité en contrôlant sélectivement au moins l'un des éléments suivants :

  ◦ La vanne de la branche de dérivation,
  ◦ La vanne de la branche principale de recirculation,
  ◦ Le générateur électrique.

L'unité de contrôle mettant en oeuvre le procédé décrit peut être intégrée au turbo-générateur pour en faire un ensemble autonome. Le procédé peut aussi être implémenté dans l'unité de contrôle pilotant le fonctionnement du moteur thermique.

L'invention sera mieux comprise à la lecture des figures.

- La figure 1 représente de manière schématique un moteur à combustion équipé d'un système de contrôle de production d'électricité selon l'invention,
- La figure 2 est un schéma bloc illustrant les différentes étapes du procédé mis en oeuvre par le système de contrôle de la figure 1,
- Les figures 3a et 3b sont des représentations schématiques du contrôle appliqué à la vanne de la branche principale de recirculation ainsi qu'à la vanne de la branche de dérivation, dans deux cas de fonctionnement.

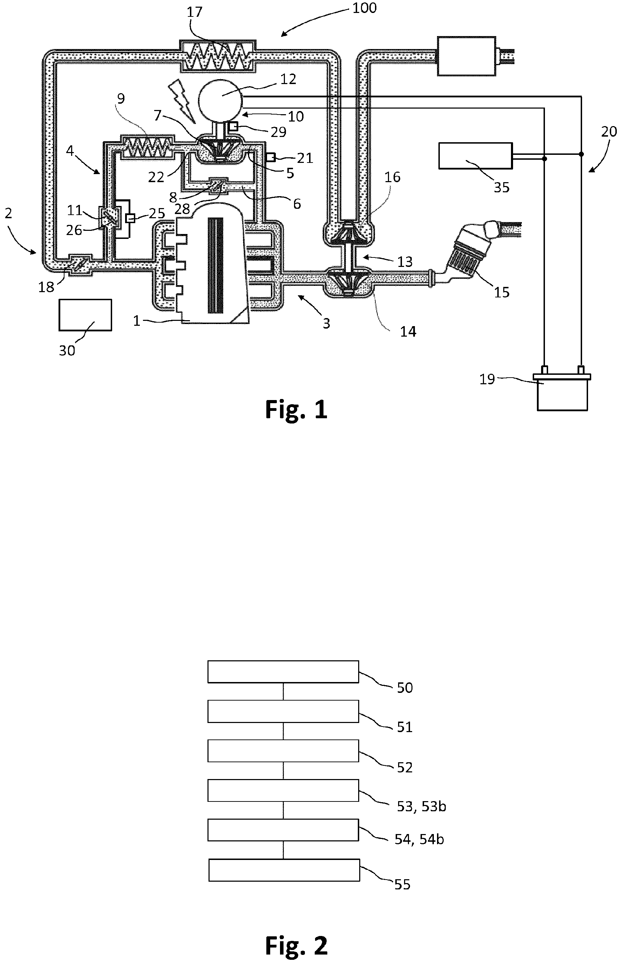

On a représenté sur la figure 1 un système de contrôle 100 d'une production d'électricité sur un véhicule automobile, comportant :

- un générateur électrique 12, ce générateur étant agencé pour être entraîné en rotation par une turbine 7 placée dans un circuit de recirculation 4 des gaz d'échappement d'un moteur thermique 1 du véhicule, la turbine 7 étant agencée pour être entraînée par les gaz d'échappement recirculés, le circuit de recirculation 4 comportant :

  ◦ Une branche principale 5 de recirculation permettant aux gaz d'échappement recirculés de traverser la turbine 7, les gaz traversant la turbine 7 rejoignant ensuite un circuit d'admission 2 du moteur 1,
  ◦ Une branche de dérivation 6 permettant de dériver au moins une partie des gaz entrant dans le circuit de recirculation 4 vers une portion de la branche principale 5 de recirculation située en aval de la turbine 7, sans traverser la turbine 7,
  ◦ Une vanne 8 agencée pour régler le débit traversant la branche de dérivation 6 de la turbine,
  ◦ Une vanne 11 agencée pour régler le débit traversant la branche principale 5 de recirculation,

- Une unité de contrôle 30 agencée pour produire de l'électricité en contrôlant sélectivement au moins l'un des éléments suivants :

  ◦ La vanne 8 de la branche de dérivation 6,
  ◦ La vanne 11 de la branche principale 5 de recirculation,
  ◦ Le générateur électrique 12.

Le fonctionnement du moteur thermique 1 est classique : l'air comburant est admis dans le circuit d'admission 2, qui comporte un compresseur de suralimentation 16 permettant d'augmenter la densité du mélange gazeux admis. Un échangeur de chaleur 17 permet de refroidir le mélange comburant avant son admission dans le moteur 1. Le boitier papillon 18 permet d'ajuster la quantité d'air comburant admise dans le moteur 1. Le carburant est injecté dans les chambres de combustion du moteur par un système d'injection non représenté. L'unité de contrôle 30 pilote l'ensemble des actionneurs électro-mécaniques équipant le moteur 1, à partir des signaux reçus des différents capteurs et des lois de contrôle enregistrées dans sa mémoire. Après combustion, les gaz d'échappement sont évacués par le circuit d'échappement 3. La majeure partie des gaz d'échappement traverse la turbine 14 du turbocompresseur 13 et l'entraîne en rotation. L'énergie reçue par la turbine 14 permet d'assurer le travail de compression du compresseur 16, la turbine 16 et le compresseur 14 étant solidaires du même arbre de rotation. Après détente dans la turbine 14, les gaz d'échappement traversent un système de dépollution 15, permettant d'éliminer les polluants présents dans les gaz d'échappement, et sont évacués à l'extérieur.

Une partie des gaz d'échappement est recirculée vers le circuit d'admission 2 du moteur 1 via le circuit de recirculation 4. Le circuit de recirculation 4 des gaz d'échappement comporte une boucle dite « haute pression », c'est-à-dire que les gaz d'échappement sont recirculés entre une portion de circuit d'échappement 3 du moteur située en amont de la turbine de suralimentation 14 du moteur thermique 1, et une portion de circuit d'admission 2 du moteur thermique 1 située en aval du compresseur de suralimentation 16.

Le générateur électrique 12 est agencé pour être entraîné en rotation par la turbine 7, elle-même entraînée par les gaz d'échappement circulant dans ce circuit de recirculation 4. L'ensemble comportant la turbine 7 et le générateur 12 est appelé turbo-générateur 10.

En plaçant la turbine 7 proche du moteur 1, selon une architecture de recirculation de gaz d'échappement « haute pression », on obtient ainsi le meilleur potentiel de récupération d'énergie, puisque les gaz d'échappement recirculés disposent du maximum d'énergie thermique et du maximum d'énergie de pression.

La vanne 11 de la branche principale 5 de recirculation est située dans la branche principale 5 de recirculation en aval de la jonction 22 entre la branche de dérivation 6 et la branche principale 5. La vanne 11 de la branche principale 5 est située dans la branche principale 5 de recirculation en aval d'un échangeur de chaleur 9 agencé pour refroidir les gaz d'échappements recirculés.

La vanne 11 de la branche principale 5 de recirculation des gaz d'échappement comporte un obturateur mobile 26 entre une position d'ouverture minimale et une position d'ouverture maximale. L'obturateur mobile 26 de la vanne 11 de la branche principale 5 est une soupape, la soupape étant agencée pour se déplacer linéairement.

La position de la soupape peut être ajustée en continu entre la position minimale d'ouverture et la position maximale d'ouverture.

La position d'ouverture minimale de l'obturateur mobile 26 de la vanne 11 correspond à un débit nul à travers la branche principale 5 de recirculation des gaz d'échappement. Par débit nul, on entend aux fuites près. En raison des inévitables défauts géométriques des pièces, il existe toujours un débit de fuite, considéré comme négligeable. En effet, les obturateurs de type soupape assurent une bonne étanchéité.

De la même manière, la vanne 8 de la branche de dérivation 6 comporte un obturateur mobile 28 entre une position d'ouverture minimale et une position d'ouverture maximale. L'obturateur mobile 28 de la vanne 8 de la branche de dérivation 6 est une soupape.

La position d'ouverture minimale de l'obturateur mobile 28 de la vanne 8 correspond à un débit nul à travers la branche de dérivation 6.

L'échangeur de chaleur 9, agencé pour refroidir les gaz d'échappements recirculés dans le circuit de recirculation 4, est de type air/air.

On va maintenant décrire les principales étapes du procédé de contrôle de la production d'énergie électrique à partir du turbo-générateur 10.

Le procédé a pour but de contrôler la production d'électricité sur un véhicule automobile, à partir d'un générateur électrique 12, ce générateur étant agencé pour être entraîné en rotation par une turbine 7 placée dans un circuit de recirculation 4 des gaz d'échappement d'un moteur thermique 1 du véhicule, la turbine 7 étant agencée pour être entraînée par les gaz d'échappement recirculés, le circuit de recirculation 4 comportant :

- Une branche principale 5 de recirculation permettant aux gaz d'échappement recirculés de traverser la turbine 7, les gaz traversant la turbine 7 rejoignant ensuite un circuit d'admission 2 du moteur 1,
- Une branche de dérivation 6 permettant de dériver au moins une partie des gaz entrant dans le circuit de recirculation 4 vers une portion de la branche principale 5 de recirculation située en aval de la turbine 7, sans traverser la turbine 7,
- Une vanne 8 agencée pour régler le débit traversant la branche de dérivation 6 de la turbine,
- Une vanne 11 agencée pour régler le débit ayant traversé la branche principale 5 de recirculation.

Le procédé comporte l'étape de produire de l'électricité en contrôlant sélectivement au moins l'un des éléments suivants : (étape 55)

- La vanne 8 de la branche de dérivation 6,
- La vanne 11 de la branche principale 5 de recirculation,
- Le générateur électrique 12.

Suivant les conditions de fonctionnement du moteur thermique, le procédé de contrôle va agir sur l'une des deux vannes 8 et 11, ou sur les deux vannes conjointement, et sur le générateur électrique 12.

Un premier objectif du procédé de contrôle est ainsi d'assurer la bonne valeur du débit de gaz d'échappement recirculés.

Pour cela, le procédé comporte l'étape :

- Contrôler la vanne 11 de la branche principale 5 de recirculation et la vanne 8 de la branche de dérivation 6 de manière à contrôler le débit de gaz d'échappement recirculés dans le circuit de recirculation 4 à un niveau souhaité.

Le débit de gaz d'échappement recirculés est déterminé en fonction des conditions de fonctionnement du moteur thermique 1, c'est-à-dire que le débit recirculé est ajusté en continu en fonction notamment du régime de rotation du moteur, du couple à délivrer, de l'état thermique du moteur. La consigne de débit de gaz d'échappement recirculés est déterminée par l'unité de contrôle 30 du moteur 1.

Un deuxième objectif du procédé est de récupérer le maximum d'énergie électrique grâce au turbo-générateur. Cette énergie électrique récupérée peut être réutilisée dans le réseau électrique 20 du véhicule sans pénaliser la consommation de carburant du moteur 1. Par comparaison, l'entraînement d'un alternateur par le moteur thermique génère un couple résistant sur le moteur thermique et crée une surconsommation de carburant. L'énergie récupérée au moyen du turbo-générateur permet donc de diminuer la consommation de carburant.

A cette fin, le procédé comporte l'étape :

- Contrôler la vanne 11 de la branche principale 5 de recirculation et la vanne 8 de la branche de dérivation 6 de manière à maximiser la puissance isentropique reçue par la turbine 7.

En jouant sur l'ouverture respective des deux vannes 8 et 11, il est possible de régler le taux de détente des gaz à travers la turbine et ainsi de maximiser le potentiel de récupération d'énergie mécanique par la turbine 7.

On peut par exemple calculer la puissance P fournie par la turbine (en W) par la relation suivante :

$$P = \dot{m} \times C_P \times T_{in} \times \left[ 1 - \left( \frac{1}{RP} \right)^{\frac{\gamma - 1}{\gamma}} \right] \times R$$

avec $\dot{m}$ le débit traversant la turbine (kg/s) ; Cp la capacité calorifique à pression constante des gaz d'échappement (J.K$^{-1}$/kg) ; $T_{in}$ la température des gaz à l'entrée de la turbine (K) ; RP le rapport entre la pression à l'entrée et la pression à la sortie de la turbine ; y le rapport entre la capacité calorifique à pression constante et la capacité calorifique à volume constant des gaz d'échappement, et R le rendement de la turbine.

En plus d'agir sur les vannes 8 et 11, il est possible d'agir sur le courant fourni par le générateur 12 pour modifier le régime de rotation du turbo-générateur et de là son rendement. Le procédé comporte ainsi l'étape :

- Contrôler le courant produit par le générateur 12 de manière à maximiser la puissance électrique fournie par le turbo-générateur 12. Ce mode d'action peut être utilisé de manière indépendante, ou de manière complémentaire à l'action sur les vannes 8 et 11.

Afin de respecter le débit de consigne de gaz d'échappement recirculés, une comparaison entre le débit réel et le débit de consigne est réalisée.

Ainsi, le procédé comporte l'étape :

- Recevoir une consigne de débit de gaz circulant dans le circuit de recirculation 4, (étape 50)
- Estimer le débit de gaz circulant dans le circuit de recirculation 4, (étape 51)
- Comparer le débit estimé de gaz recirculés et le débit de consigne. (étape 52)

La consigne de débit de gaz d'échappement recirculés, provenant de l'unité de contrôle 30, est comparée à l'estimation du débit réel traversant le circuit de recirculation 4. Le débit de gaz recirculés est estimé à partir d'une valeur estimée de la surface de passage de la vanne 11 de la branche principale 5 de recirculation, de la température des gaz et de la valeur mesurée de la différence de pression entre un coté amont et un coté aval de la vanne 11 de la branche principale 5 de recirculation. La température des gaz est mesurée par un capteur 21 de température. Elle peut être estimée par l'unité de contrôle 30 en fonction des conditions de fonctionnement du moteur. La pression absolue des gaz en amont de la vanne 11 pourra également être mesurée.

La surface de passage de la vanne 11 de la branche principale 5 de recirculation est estimée à partir d'une mesure de la position de l'obturateur mobile 26 de la vanne 11. La correspondance entre la position de l'obturateur mobile 26 et la surface de passage de la vanne est mémorisée dans la mémoire de l'unité de contrôle 30.

La différence de pression entre un côté amont et un côté aval de la vanne 11 de la branche principale 5 de recirculation est mesurée par un capteur 25 de pression différentielle. Le capteur est relié à deux piquages situés sur le circuit de recirculation 4 de part et d'autre de la vanne 11. Le procédé comporte l'étape :

- Si le débit de consigne est supérieur au débit estimé de gaz recirculés, contrôler la vanne 11 de la branche principale 5 de façon à augmenter le débit traversant la branche principale 5. (étape 53)

Le procédé comporte l'étape :

- Si le débit de consigne est supérieur au débit estimé de gaz recirculés, contrôler la vanne 8 de la branche de dérivation 6 de façon à augmenter le débit traversant la branche de dérivation 6. (étape 53b)

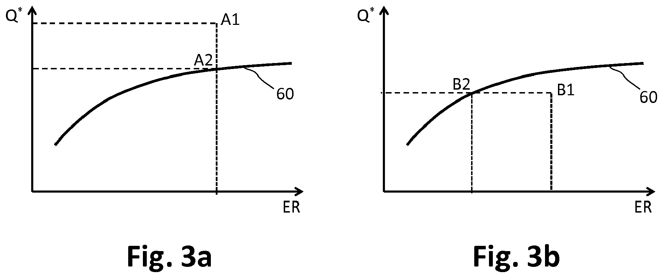

La figure 3a illustre ce cas de figure. On a représenté sur l'axe des abscisses le rapport de détente dans la turbine, c'est-à-dire le rapport de la pression en amont de la vanne 11 et de la pression en aval de la vanne 11. On a représenté sur l'axe des ordonnées le débit réduit de gaz traversant la turbine, c'est-à-dire le débit ramené aux conditions normales de pression et de température. La courbe 60 correspond à la courbe caractéristique de la turbine 7 choisie, c'est-à-dire le débit réduit traversant la turbine en fonction du taux de détente à la turbine. A une valeur du rapport de détente correspond une valeur du débit réduit, il n'est pas possible de faire varier indépendamment ces deux paramètres. Lorsque le débit réduit change, le régime de rotation de la turbine change. Le débit maximal est atteint lorsque l'écoulement de gaz atteint la vitesse du son, la turbine est alors saturée. La courbe caractéristique de la turbine dépend principalement des sections d'entrée et de sortie de la turbine ainsi que de la géométrie de la roue de turbine. La pression en amont de la turbine ne dépend que des conditions de fonctionnement du moteur thermique. La pression en aval de la turbine peut être modifiée en agissant sur la section de passage de la vanne de recirculation 11.

Le point A1 de la figure 3a correspond au débit de consigne réclamé par l'unité de contrôle 30. Ce point est situé au dessus du point A2 correspondant au débit nominal de la turbine pour le taux de détente considéré. Autrement dit, le débit maximal pouvant traverser la turbine 7 est inférieur à la consigne. Afin de respecter la consigne de débit du circuit 4, la perméabilité du circuit de recirculation 4 doit être augmentée. Pour cela, l'ouverture de la vanne 11 de la branche principale peut être augmentée. Lorsque la vanne 11 de la branche principale est en position d'ouverture maximale et que le débit de consigne continue à être supérieur au débit recirculés, l'ouverture de la vanne de dérivation 8 est également augmentée. Ainsi, la perméabilité du circuit de recirculation 4 est augmentée à nouveau.

Afin de traiter le cas inverse, le procédé comporte l'étape :

- Si le débit de consigne est inférieur au débit estimé de gaz recirculés, contrôler la vanne 8 de la branche de dérivation 56 de façon à diminuer le débit traversant la branche de dérivation 6. (étape 54)

En complément, le procédé comporte l'étape :

- Si le débit de consigne est inférieur au débit estimé de gaz recirculés, contrôler la vanne 11 de la branche principale 5 de recirculation de façon à diminuer le débit dans la branche principale 5 de recirculation. (étape 54b)

La figure 3b illustre ce cas de figure. Le point B1, correspondant au débit de consigne, est situé au dessous de la courbe caractéristique 60 de la turbine. Le circuit de recirculation doit donc être rendu moins perméable. Pour cela, l'ouverture de la vanne 8 de la branche de dérivation va être diminuée afin de faire chuter le débit dans la branche de dérivation. Lorsque la vanne 8 est totalement fermée et que le débit de consigne continue à être supérieur au débit réel recirculé, l'ouverture de la vanne de recirculation 11 va être diminuée à son tour afin de diminuer le débit dans le circuit 4 et d'augmenter la pression en amont de la vanne 11. La pression en aval de la vanne reste inchangée tandis que la pression en amont augmente, par conséquent le taux de détente dans la turbine diminue. Le point B2 peut donc se situer ainsi sur la courbe caractéristique de la turbine 7.

Les points de fonctionnement pour lesquels la consigne de débit de gaz recirculés se situe sur la courbe caractéristique 60 de la turbine correspondent à un fonctionnement avec la vanne de recirculation 11 totalement ouverte et la vanne 8 de dérivation totalement fermée. Les exemples des figures 3a et 3b illustrent un fonctionnement dans lequel une seule des deux vannes est actionnée à la fois, en pratique la vanne 11 de recirculation de gaz d'échappement et la vanne 8 de dérivation peuvent être actionnées simultanément.

Un autre objectif du procédé de contrôle décrit est de gérer le régime de rotation de l'ensemble turbine et générateur afin d'éviter les survitesses.

En effet, aussi bien la turbine 7 que le générateur 12 ont un régime maximal de rotation, et un dépassement de ce régime maximal est susceptible de les endommager. Le régime de rotation du turbo-générateur 10 doit donc être contrôlé.

A cet effet, le procédé comporte l'étape :

- Contrôler la vanne 11 de la branche principale 5 de recirculation et la vanne 8 de la branche 6 de dérivation de manière à limiter le régime de rotation de la turbine 7.

Une augmentation de l'ouverture de la vanne 8 de dérivation permet de faire chuter le régime de rotation de la turbine.

De même, en diminuant l'ouverture de la vanne de recirculation 11, le débit et le taux de détente diminuent, ce qui fait chuter le régime de rotation de la turbine 7. En complément, le procédé comporte l'étape :

- Contrôler le courant produit par le générateur 12 de manière à limiter le régime de rotation de la turbine 7.

Plus précisément, l'intensité du courant produit par le générateur 12 est augmentée de manière à limiter le régime de rotation de la turbine 7.

En augmentant l'intensité du courant débité, le couple résistant du générateur 12 augmente, ce qui a tendance à freiner l'ensemble turbo-générateur 10. Cela suppose que l'unité de stockage de l'énergie électrique 19, ou les consommateurs électriques 35, soient capables d'absorber le courant supplémentaire. Dans ces conditions, la régulation du régime de rotation est réalisée sans restreindre l'écoulement des gaz d'échappement par la vanne 11, ce qui favorise la récupération d'énergie par le turbo-générateur 12.

En variante ou de manière complémentaire, le procédé comporte l'étape :

- Contrôler un dispositif agencé pour appliquer un couple de frottement à la turbine 7 ou au générateur 12 de manière à limiter le régime de rotation du turbo-générateur 10.

L'application d'un couple de frottement par l'intermédiaire du dispositif 29 permet de faire chuter très rapidement le régime de rotation de la turbine. Le frein peut être notamment un frein à disque ou un frein à tambour.

Selon des modes de réalisation non représentés, le procédé décrit peut également comprendre une ou plusieurs des caractéristiques ci-dessous, considérées individuellement ou combinées entre elles :

- L'unité de contrôle 30 du turbo-générateur est intégrée au turbo-générateur 10.
- Le débit de gaz recirculés est estimé à partir d'une valeur estimée du débit total de gaz admis dans le moteur 1 et d'une valeur mesurée du débit total d'air admis dans le moteur 1.
- La vanne 8 de la branche de dérivation 6 est agencée pour avoir seulement deux positions d'équilibre stable de l'obturateur mobile 28, la première position correspondant à la position d'ouverture minimale, la deuxième position correspondant à la position d'ouverture maximale.
- L'échangeur de chaleur 9 agencé pour refroidir les gaz d'échappements recirculés est de type air/eau.
- L'obturateur mobile 28 de la vanne 8 de la branche de dérivation 6 est un volet rotatif, le volet étant agencé pour pivoter autour d'un axe de rotation.
- L'obturateur mobile 26 de la vanne 11 de la branche principale 5 est un volet rotatif, le volet étant agencé pour pivoter autour d'un axe de rotation.
- La vanne 11 de la branche principale 5 de recirculation est située dans la branche principale 5 de recirculation en amont de la jonction 22 entre la branche de dérivation 6 et la branche principale 5.
- Le procédé de contrôle de la production d'électricité comporte l'étape :

  Contrôler un dispositif agencé pour appliquer un couple de frottement à la turbine 7 ou du générateur 12 de manière à limiter le régime de rotation du turbo-générateur 10.

**Revendications**

1. Procédé de contrôle d'une production d'électricité sur un véhicule automobile, à partir d'un générateur électrique (12), ce générateur étant agencé pour être entraîné en rotation par une turbine (7) placée dans un circuit de recirculation (4) des gaz d'échappement d'un moteur thermique (1) du véhicule, la turbine (7) étant agencée pour être entraînée par les gaz d'échappement recirculés, le circuit de recirculation (4) comportant :

   - Une branche principale (5) de recirculation permettant aux gaz d'échappement recirculés de traverser la turbine (7), les gaz ayant traversé la turbine (7) rejoignant ensuite un circuit d'admission (2) du moteur (1),
   - Une branche de dérivation (6) permettant de dériver au moins une partie des gaz entrant dans le circuit de recirculation (4) vers une portion de la branche principale (5) de recirculation située en aval de la turbine (7), sans traverser la turbine (7),
   - Une vanne (8) agencée pour régler le débit traversant la branche de dérivation (6) de la turbine,
   - Une vanne (11) agencée pour régler le débit traversant la branche principale (5) de recirculation,

   **caractérisé en ce que** le procédé comporte l'étape de produire de l'électricité en contrôlant sélectivement au moins l'un des éléments suivants : (étape 55)

   - La vanne (8) de la branche de dérivation (6),
   - La vanne (11) de la branche principale (5) de recirculation,
   - Le générateur électrique (12).

2. Procédé selon la revendication 1, comportant l'étape :

   - Contrôler la vanne (11) de la branche principale (5) de recirculation et la vanne (8) de la branche de dérivation (6) de manière à contrôler le débit de gaz d'échappement recirculés dans le circuit de recirculation (4) à un niveau souhaité.

3. Procédé selon la revendication 1 ou 2, comportant l'étape :

   - Contrôler la vanne (11) de la branche principale (5) de recirculation et la vanne (8) de la branche de dérivation (6) de manière à maximiser la puissance isentropique reçue par la turbine (7).

4. Procédé selon l'une des revendications précédentes, comportant l'étape :

- Recevoir une consigne de débit de gaz circulant dans le circuit de recirculation (4), (étape 50)
- Estimer le débit de gaz circulant dans le circuit de recirculation (4), (étape 51)
- Comparer le débit estimé de gaz recirculés et le débit de consigne. (étape 52)

**5.** Procédé selon la revendication 4, comportant l'étape :

- Si le débit de consigne est supérieur au débit estimé de gaz recirculés, contrôler la vanne (8) de la branche de dérivation (6) de façon à augmenter le débit traversant la branche de dérivation (6). (étape 53b)

**6.** Procédé selon la revendication 4 ou 5, comportant l'étape :

- Si le débit de consigne est inférieur au débit estimé de gaz recirculés, contrôler la vanne (11) de la branche principale (5) de recirculation de façon à diminuer le débit dans la branche principale (5) de recirculation. (étape 54b)

**7.** Procédé selon l'une des revendications précédentes, comportant l'étape :

- Contrôler la vanne (11) de la branche principale (5) de recirculation et la vanne (8) de la branche (6) de dérivation de manière à limiter le régime de rotation de la turbine (7).

**8.** Procédé selon l'une des revendications précédentes, comportant l'étape :

- Contrôler le courant produit par le générateur (12) de manière à limiter le régime de rotation de la turbine (7).

**9.** Procédé selon l'une des revendications précédentes, selon lequel la vanne (11) de la branche principale (5) de recirculation est située dans la branche principale (5) de recirculation en aval de la jonction (22) entre la branche de dérivation (6) et la branche principale (5).

**10.** Procédé selon l'une des revendications précédentes, selon lequel la vanne (11) de la branche principale (5) est située dans la branche principale (5) de recirculation en aval d'un échangeur de chaleur (9) agencé pour refroidir les gaz d'échappements recirculés.

**11.** Système de contrôle (100) d'une production d'électricité sur un véhicule automobile, comportant :

- un générateur électrique (12), ce générateur étant agencé pour être entraîné en rotation par une turbine (7) placée dans un circuit de recirculation (4) des gaz d'échappement d'un moteur thermique (1) du véhicule, la turbine (7) étant agencée pour être entraînée par les gaz d'échappement recirculés, le circuit de recirculation (4) comportant :

◦ Une branche principale (5) de recirculation permettant aux gaz d'échappement recirculés de traverser la turbine (7), les gaz traversant la turbine (7) rejoignant ensuite un circuit d'admission (2) du moteur (1),
◦ Une branche de dérivation (6) permettant de dériver au moins une partie des gaz entrant dans le circuit de recirculation (4) vers une portion de la branche principale (5) de recirculation située en aval de la turbine (7), sans traverser la turbine (7),
◦ Une vanne (8) agencée pour régler le débit traversant la branche de dérivation (6) de la turbine,
◦ Une vanne (11) agencée pour régler le débit traversant la branche principale (5) de recirculation,

- Une unité de contrôle (30) agencée pour produire de l'électricité en contrôlant sélectivement au moins l'un des éléments suivants :

◦ La vanne (8) de la branche de dérivation (6),
◦ La vanne (11) de la branche principale (5) de recirculation,
◦ Le générateur électrique (12).

**Fig. 1**

**Fig. 2**

**Fig. 3a**

**Fig. 3b**

Europäisches
Patentamt

European
Patent Office

Office européen
des brevets

**RAPPORT DE RECHERCHE EUROPEENNE**

Numéro de la demande

EP 17 15 6856

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | GB 2 519 136 A (CUMMINS LTD [GB]) 15 avril 2015 (2015-04-15) * page 3, ligne 1 - page 4, ligne 14 * * page 5, ligne 1 - ligne 21 * * page 6, ligne 5 - ligne 10 * * page 15, ligne 8 - page 18, ligne 10 * * figure 3 * ----- | 1-11 | INV. F02D41/00 F01N5/04 F02M26/34 F02M26/44 |
| X | US 2007/220885 A1 (TURNER DAVID [US] ET AL) 27 septembre 2007 (2007-09-27) * alinéa [0008] * * alinéas [0012] - [0015] * * alinéas [0018], [0017] * * figures 1,2 * ----- | 1-11 | |
| A | WO 2014/107407 A1 (EATON CORP [US]; EYBERGEN WILLIAM NICHOLAS [US]; SUBRAMANIAN SWAMI NAT) 10 juillet 2014 (2014-07-10) * alinéas [0042] - [0056] * * figures 9-11 * ----- | 1-11 | |
| | | | DOMAINES TECHNIQUES RECHERCHES (IPC) |
| A | EP 2 196 659 A1 (ABB TURBO SYSTEMS AG [CH]) 16 juin 2010 (2010-06-16) * alinéas [0011] - [0046] * * alinéa [0073] * * figure 2 * ----- | 1-11 | F02D F01N F02M |
| A | US 2011/094486 A1 (VUK CARL T [US]) 28 avril 2011 (2011-04-28) * le document en entier * ----- | 1,11 | |

Le présent rapport a été établi pour toutes les revendications

| Lieu de la recherche | Date d'achèvement de la recherche | Examinateur |
|---|---|---|
| Munich | 18 septembre 2017 | Wettemann, Mark |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P04C02)

13

## ANNEXE AU RAPPORT DE RECHERCHE EUROPEENNE
## RELATIF A LA DEMANDE DE BREVET EUROPEEN NO.

EP 17 15 6856

La présente annexe indique les membres de la famille de brevets relatifs aux documents brevets cités dans le rapport de recherche européenne visé ci-dessus.

Lesdits members sont contenus au fichier informatique de l'Office européen des brevets à la date du

Les renseignements fournis sont donnés à titre indicatif et n'engagent pas la responsabilité de l'Office européen des brevets.

18-09-2017

| Document brevet cité au rapport de recherche | | Date de publication | Membre(s) de la famille de brevet(s) | | | Date de publication |
|---|---|---|---|---|---|---|
| GB 2519136 | A | 15-04-2015 | AUCUN | | | |
| US 2007220885 | A1 | 27-09-2007 | AUCUN | | | |
| WO 2014107407 | A1 | 10-07-2014 | CN | 104995384 | A | 21-10-2015 |
| | | | DE | 112013006341 | T5 | 10-09-2015 |
| | | | WO | 2014107407 | A1 | 10-07-2014 |
| EP 2196659 | A1 | 16-06-2010 | AUCUN | | | |
| US 2011094486 | A1 | 28-04-2011 | AUCUN | | | |

EPO FORM P0460

Pour tout renseignement concernant cette annexe : voir Journal Officiel de l'Office européen des brevets, No.12/82

**EP 3 236 053 A1**

## RÉFÉRENCES CITÉES DANS LA DESCRIPTION

**Documents brevets cités dans la description**

- EP 2379867 A

- FR 20140055947